# EUROPEAN PATENT SPECIFICATION

(11) **EP 3 594 910 B1**
(45) Date of publication and mention of the grant of the patent: **19.06.2024**
(21) Application number: 18182861.7
(22) Date of filing: 11.07.2018
(51) Int. Cl.: G07C 9/00, B60R 25/00

(54) **SYSTEM AND METHOD FOR ENABLING FUNCTIONS OF AN OBJECT**
SYSTEM UND VERFAHREN ZUR AKTIVIERUNG VON FUNKTIONEN EINES OBJEKTS
SYSTÈME ET PROCÉDÉ D'ACTIVATION DES FONCTIONS D'UN OBJET

(43) Date of publication of application: 15.01.2020
(73) Proprietor: Continental Automotive Technologies GmbH, 30175 Hannover (DE)
(72) Inventor: Doering, Markus, 94315 Straubing (DE); Lelong, Hermann, 3040 Sint-Aghata-Rode (BE); Wirth, Martin, 1030 Schaerbeek (BE)
(74) Representative: Continental Corporation

(56) References cited:
- WO-A1-2018/091168
- US-A1- 2008 201 160
- US-A1- 2014 232 524
- US-A1- 2018 075 287

## Description

The current invention relates a system and a related method for enabling functions of an object, in particular a system and method for enabling functions of a vehicle.

Most vehicles today may be unlocked and started using an electronic key. Some start and entry systems are known in which the user needs to press an unlocking button on the key to unlock the vehicle. In order to start the vehicle, the key usually has to be inserted into an arrangement which replaces the ignition switch, as is known from older vehicles. Other start and entry systems are known in which the vehicle may be unlocked and started without the user having to press a button or having to insert the key in any arrangement. Such start and entry systems are often called keyless start and entry systems. With keyless start and entry systems, the vehicle may be unlocked automatically when the key is detected within a certain distance from the vehicle. In order to start the vehicle, a start button within the vehicle usually has to be pressed while the key is detected as being located near or within the vehicle.

Many other start and entry systems are known. Today, smartphones or other electronic devices may function as the vehicle key. That means that when the user's smartphone is detected within a certain distance from the vehicle, the vehicle may be unlocked and subsequently started when, in addition, a start button within the vehicle is pressed. This reduces the number of devices a user has to carry with him. Most people today own a smartphone which they carry with them anyway. Therefore, carrying an additional car key becomes superfluous if the smartphone itself functions as the car key. However, most people change their smartphones more frequently than their vehicles. In other words, the lifetime of a smartphone is usually much shorter than the lifetime of a vehicle. Therefore, a new smartphone needs to be programmed to function as the vehicle key each time a user changes his smartphone. Further, car sharing becomes more and more popular. Vehicle keys, therefore, in many cases need to be used by many different people and need to be passed on frequently. However, many users of one and the same vehicle do not know each other, which makes it difficult or even impossible to pass on the keys to another user. Above all, security still plays a very important role to prevent unauthorized people from using the vehicle. Many smartphones today, however, still do not meet the necessary security requirements that are required when using the smartphone to perform vehicle key functions.

Document WO 2018/091168 A1 discloses a method for authorizing access to a motor vehicle for use by a third-party. In the method, a third party request message requesting use by the third party is received by a server device. After the request message is received, an access code with which the third party use is authorized is generated. A release message is then output to the third party, said release message containing the access code. In an additional method step, a test code which matches the access code is output to the motor vehicle. Finally, the access to the motor vehicle is authorized for the third-party use if the motor vehicle receives an access code via a near-region receiving device, said access code matching the test code which has been transmitted to the motor vehicle (by the server device.

Document US 2014/0232524 A1 discloses an electronic key system including a lock-side terminal that is mounted in a locked object and capable of at least locking and unlocking the locked object, and a portable terminal capable of sending and receiving the electronic key to and from the lock-side terminal mounted in the locked object and the other portable terminals, and when receiving a request from the one portable terminal, the lock-side terminal generates the electronic key at random, and sends the randomly generated electronic key to the one portable terminal.

Document US 2008/0201160 A1 discloses a method for managing car lease using a car-use electronic device and a mobile device, comprising steps of: picking up a car data from a data base for matching so as to provide a first data comprising a car password and a second data comprising a user password when an information center receives a renting request, wherein the car password and the user password are matched; transmitting the first data to the mobile device of a user and the second data to a controller on a car; and authorizing the user to star the car if the controller verifies that the car password and the user password are matched after the user transmits the car password from the mobile device to the controller.

Document US 2018/0075287 A1 discloses a communication system and a method of identifying a target vehicle using application software on a mobile device. The method includes the steps of receiving at the mobile device a wireless signal transmitted from a transmitter at the target vehicle, wherein the wireless signal is received using an imaging detector in the mobile device; identifying that the target vehicle is a source of the wireless signal based on characteristics of the wireless signal; and in response to the identification, displaying to a user on a display of the mobile device an indication of an identity of the target vehicle.

The problem to be solved by the current invention is to provide a system and method for enabling at least one function of an object, e.g., a vehicle, which provide a high security level and which overcome the drawbacks indicated above.

This problem is solved by a system according to claim 1 and a method according to claim 8. Configurations and further developments of the invention are the subject of the dependent claims.

A system includes an object, a portable electronic device, and a backend device. The backend device is configured to, upon occurrence of a triggering event, generate a first virtual key and transmit the first virtual key to the portable electronic device, and generate a corresponding second virtual key and transmit the second virtual key to the object. At least one function of the object may be enabled if the portable electronic device is detected within a predefined distance from the object and the first virtual key and the second virtual key are determined to be valid and to correspond to each other.

In this way, any authorized portable electronic device may function as a key to the object. The risk of tampering or other attacks on the system is reduced and, consequently, the security level of the system is increased.

The first virtual key may be valid for a limited amount of time and/or for a limited number of enabling events. This increases the security level even further.

For example, the first virtual key may only be used to enable the at least one function of the object once. Therefore, even if an unauthorized person manages to get hold of the virtual key, this person would not be able to use the first virtual key himself.

The backend device is configured to generate the first virtual key and the second virtual key after verifying that the portable electronic device and the object are both registered within the backend device. This increases the security level even further, because portable electronic devices that are not registered at the backend device are not able to receive a virtual key from the backend device.

The portable electronic device includes a first pair of cryptographic keys, the first pair of cryptographic keys including a first private key and a first public key. The portable electronic device is configured to transmit the first public key to the backend device and is verified as being registered within the backend device if the first public key is stored within the backend device. The object includes a second pair of cryptographic keys, the second pair of cryptographic keys including a second private key and a second public key. The object is configured to transmit the second public key to the backend device and is verified as being registered within the backend device if the second public key is stored within the backend device.

The triggering event may include at least one of: a request from the portable electronic device; the detection of the portable electronic device being within a predefined distance from the object; and a request from an entitled authority.

Virtual keys, therefore, may be generated with or without active intervention of a user.

The first virtual key may be configured to enable limited or full usage of the at least one function of the object. In this way, the use of the object may be easily controlled by a user or an authority.

The object may be a vehicle.

The at least one function may include at least one of: unlocking at least one of the vehicle's doors; starting the vehicle; and driving the vehicle at a velocity that is below a predetermined maximum velocity. The usage of different vehicle functions may easily be controlled and customized for different users.

A method includes, upon occurrence of a triggering event, generating a first virtual key in a backend device and transmitting the first virtual key from the backend device to a portable electronic device. The method further includes, upon occurrence of the triggering event, generating a corresponding second virtual key in the backend device and transmitting the second virtual key from the backend device to an object. The method further comprises enabling at least one function of the object if the portable electronic device is detected within a predefined distance from the object and the first virtual key and the second virtual key are determined to be valid and to correspond to each other. The first virtual key (and the second virtual key are generated after verifying that the portable electronic device and the object are both registered within the backend device. The portable electronic device comprises a first pair of cryptographic keys, the first pair of cryptographic keys including a first private key and a first public key, wherein the portable electronic device is configured to transmit the first public key to the backend device, and wherein the portable electronic device is verified as being registered within the backend device if the first public key is stored within the backend device. The object comprises a second pair of cryptographic keys, the second pair of cryptographic keys including a second private key and a second public key, wherein the object is configured to transmit the second public key to the backend device, and wherein the object is verified as being registered within the backend device if the second public key is stored within the backend device.

Examples are now explained with reference to the drawings. In the drawings the same reference characters denote like features.
- Figure 1: illustrates the general principle of a keyless start and entry system.
- Figure 2: illustrates an exemplary system according to the present invention.
- Figure 3: illustrates another exemplary system according to the present invention.
- Figure 4: exemplarily illustrates in a flow diagram a method according to the present invention.

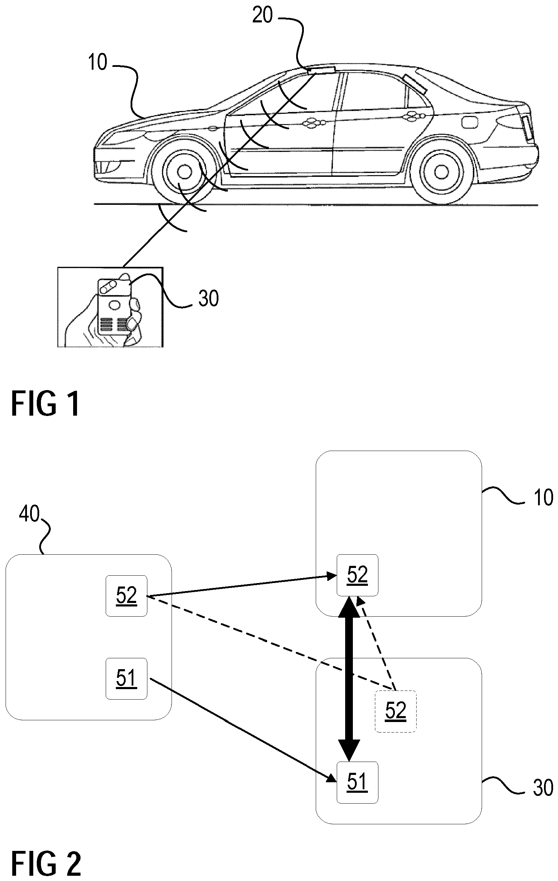

Figure 1 illustrates a vehicle 10 with a conventional keyless start and entry system. The start and entry system comprises a control unit 20. The control unit 20 may be arranged anywhere within or on the vehicle 10. The control unit 20 is configured to trigger an unlocking or engine start process if an electronic key belonging to the vehicle 10 is detected near or inside the vehicle 10. The control unit 20 sends out inquiry signals. Such inquiry signals are usually low frequency signals (about 20kHz to 200kHz). The inquiry signals are coded with a first coding chart. The inquiry signals may be received by a transponder unit 30 (vehicle key) if the transponder unit 30 is within the range of the signals. The transponder unit 30 decodes, analyses and/or further processes the inquiry signals. After further processing the inquiry signals, the transponder unit 30 sends response signals back to the control unit 20. The response signals are coded with a second coding chart. The response signals may be generated by means of load modulation, for example, and may be decoded within the vehicle 10.

The vehicle 10 knows both coding charts and may compare the original inquiry signals with the received response signals. If the response signals are identified as being correct, the vehicle 10 may be unlocked. If a start button is pressed and the response signals are identified as being correct, the vehicle 10 may be started. If, after sending the inquiry signals, no response signals or incorrect response signals are received within a certain time, nothing happens and the vehicle 10 remains locked and/or turned off.

The transponder unit 30 may be arranged within a vehicle key or a portable electronic device such as a mobile phone, for example, which the user of the vehicle 10 carries with him.

The control unit 20 may send out inquiry signals in regular intervals or in response to a certain trigger event. Such a trigger event may be the user touching the door handle or pressing a start button, for example.

The vehicle 10 may be any kind of vehicle, for example a passenger car, a truck, a bus, a train, a tractor, a motorcycle, a boat, or an aircraft.

In many start and entry systems today, a portable electronic device such as a smart phone, a laptop, a tablet device, or a portable multimedia device, for example, may act as the vehicle key (transponder unit 30). In such cases, it is no longer necessary for the user to carry a separate vehicle key. Most people today possess smart phones which they carry with them most of the time. By making the smart phone act as a vehicle key, for example, it is no longer necessary to carry a dedicated vehicle key in addition to the smart phone. In known systems, a portable electronic device is programmed once and may then subsequently act as a vehicle key. Any electronic vehicle keys are stored in the portable electronic device once and may subsequently be used by the portable electronic device.

However, such systems have several disadvantages. For example, many portable electronic devices do not fulfill safety requirements. Therefore, such systems may be easily attacked (e.g., relay attack). Further, many users today change their smartphones or other electronic devices much more often than their vehicles. A portable electronic device, therefore, very often is not assigned to a specific vehicle for the entire lifetime of the vehicle. Even further, car sharing becomes more and more popular. Therefore, many users need to be able to unlock and start a particular vehicle and, possibly, to enable further functions of the vehicle.

Figure 2 illustrates a system according to one example of the present invention which has an increased security level and is able to overcome at least some of the disadvantages mentioned above.

The system comprises a vehicle 10 and a portable electronic device 30 (transponder unit). The system further comprises a backend device 40. Upon request or upon occurrence of a triggering event, the backend device 40 is configured to generate a first virtual key 51 and transmit the first virtual key 51 to the portable electronic device 30. At the same time, the backend device 40 may further generate a corresponding second virtual key 52 which is transmitted to the vehicle 10. The second virtual key may be directly transmitted from the backend device 40 to the vehicle 10. According to another example, however, the second virtual key 52 may be transmitted to the vehicle 10 via the portable electronic device 30 (indicated by the dashed arrow in Figure 2).

For example, the backend device 40 may transmit the second virtual key 52 to the portable electronic device 30 which forwards the second virtual key 52 to the vehicle 10. For example, the second virtual key 52 may be encrypted such that the portable electronic device 30 is not able to read the second virtual key 52. Only the vehicle 10 may be able to read the second virtual key 52. The second virtual key 52 may not be permanently stored in the portable electronic device.

According to one example, the backend device 40 transmits the first virtual key 51 and the second virtual key 52 via a wireless connection, such as a WiFi connection, or via a cloud, for example. That is, a portable electronic device 30 and a vehicle 10 may only receive a virtual key while they are connected to the backend device 40. After receiving the virtual key from the backend device 40, however, the portable electronic device and the vehicle 10 may store the first virtual key 51 and the second virtual key 52, respectively. The communication channels between the portable electronic device 30 and the backend device 40, and between the vehicle 10 and the backend device 40 may be secure communication channels. For example, any data that is sent via the communication channels may be encrypted.

After receiving the virtual keys 51, 52, the vehicle 10 and the portable electronic device 30 may start a communication with each other. For example, the portable electronic device 30 and the vehicle 10 may establish a Bluetooth connection, Bluetooth Low Energy (BLE) connection, ultra wideband (UWB) connection, near field communication (NFC) connection, WiFi connection, or any other suitable connection. During this communication, it may be determined whether the first virtual key 51 and the second virtual key 52 correspond to each other. If the first virtual key 51 and the second virtual key 52 do not correspond to each other, nothing happens and the vehicle 10 will remain locked and may not be started. If the first virtual key 51 and the second virtual key 52 are determined to correspond to each other and the portable electronic device 30 is further detected within a predefined distance from the vehicle 10, the vehicle 10 may be unlocked and/or started. Alternatively, or additionally, one or more other functions of the vehicle 10 may be enabled, e.g., the use of a sound system, the use of a navigation system, or any other comfort or safety systems.

For example, the vehicle 10 may only be unlocked if the portable electronic device 30 is detected within a distance of maximally 10 meters, maximally 5 meters or maximally 2 meters from the vehicle 10. In order to be able to start the vehicle 10, it might be required that the portable electronic device 30 is detected within the vehicle. Other requirements concerning the maximum distance are also possible. If the portable electronic device 30 is not detected within the predefined distance, the vehicle 10 may remain locked and may not be started.

A triggering event which initiates the generation of a first and second virtual key 51, 52 may comprise at least one of the following events: a request supplied by a user via the portable electronic device 30, the detection of the portable electronic device 30 within a predefined distance from the vehicle 10, and a request from an entitled authority. An entitled authority may be a fleet management, a company or individual which owns the vehicle, or an OEM (Original Equipment Manufacturer), for example.

For example, an application (app) may be installed on the portable electronic device 30. If a user wishes to use the vehicle 10, he may open the application and express his intention of using the vehicle 10. The portable electronic device 30 may establish a connection with the backend device 40 which subsequently generates and transmits the virtual keys 51, 52 to the portable electronic device 30 and the vehicle 10. According to another example, the portable electronic device 30 detects that it has entered a predefined range about the vehicle 10 and sends a request to the backend device 40 autonomously. That is, the user does not necessarily have to take any action himself. According to an even further example, the vehicle 10 may be a rental car. The user may contact the rental car company and rent the vehicle 10 for a certain amount of time (e.g., for one day). The rental car company may trigger the generation of the virtual keys 51, 52 which are subsequently transmitted to the portable electronic device 30 of the user and to the vehicle 10. Any other suitable triggering events are also possible.

According to one example, the first virtual key 51 may only be valid for a predefined amount of time. For example, the first virtual key 51 may only be valid for one hour, one day or one week. The predefined amount of time may be specified by an owner of the vehicle 10, for example. For example, the owner of a vehicle lends the vehicle 10 to a friend for one day. He may trigger the generation of a first and second virtual key 51, 52 which are sent to the portable electronic device 30 of the friend and to the vehicle 10. In order to prevent the friend from using the car longer than intended, the first virtual key 51 may only be valid as long as the owner intents to let him use the vehicle 10. According to another example, the predefined time may be set by a rental company. For example, if a user rents the vehicle 10 for a week, the first virtual key 51 may be valid for the entire rental time and may then expire automatically. The virtual key 51 may expire and/or may be automatically deleted from the portable electronic device 30. According to another example, the first virtual key 51 may be valid for a limited number of enabling events. For example, the vehicle 10 may only be unlocked and/or started once or any other intended number of times.

According to an even further example, the first virtual key 51 may enable unlimited access to the vehicle 10. According to another example, enabling of the vehicle functions may be limited. For example, the first virtual key 51 may grant access to the trunk only but may not be authorized to unlock the passenger compartment. According to another example, other functions of the vehicle 10 may be limited. For example, a user may initiate the generation of a virtual key 51 for his son who has just gotten his driver's license. The first virtual key 51 may authorize the son to unlock and start the vehicle 10, however, the son might only be allowed to drive at a predefined maximum speed, e.g., at a speed of 110km/h or below. Any other restrictions to the vehicle functions are possible.

The first virtual key 51 may only be generated if the portable electronic device 30 is an authorized portable electronic device 30. According to one example, a user may register his portable electronic device 30 after purchasing the vehicle 10. For example, when purchasing the vehicle 10, the user may obtain a secure code with which he can register both the vehicle 10 and his portable electronic device 30 (or even more than one portable electronic device) at the backend device 40. According to the claimed invention, his portable electronic device 30 comprises a first pair of cryptographic keys 61, 63, the first pair of cryptographic keys 61, 63 comprising a first private key 63 and a first public key 61. The portable electronic device 30 transmits its public cryptographic key 61 to the backend device 40. The portable electronic device 30 is verified as being registered within the backend device 40 if the first public key 61 is stored within the backend device 40. The vehicle 10 comprises a second pair of cryptographic keys 62, 64, the second pair of cryptographic keys 62, 64 comprising a second private key 64 and a second public key 62. The vehicle 10 transmits its public cryptographic key 62 to the backend device 40. The vehicle 10 is subsequently registered as being verified within the backend device 40 if the second public key 62 is stored within the backend device 40.

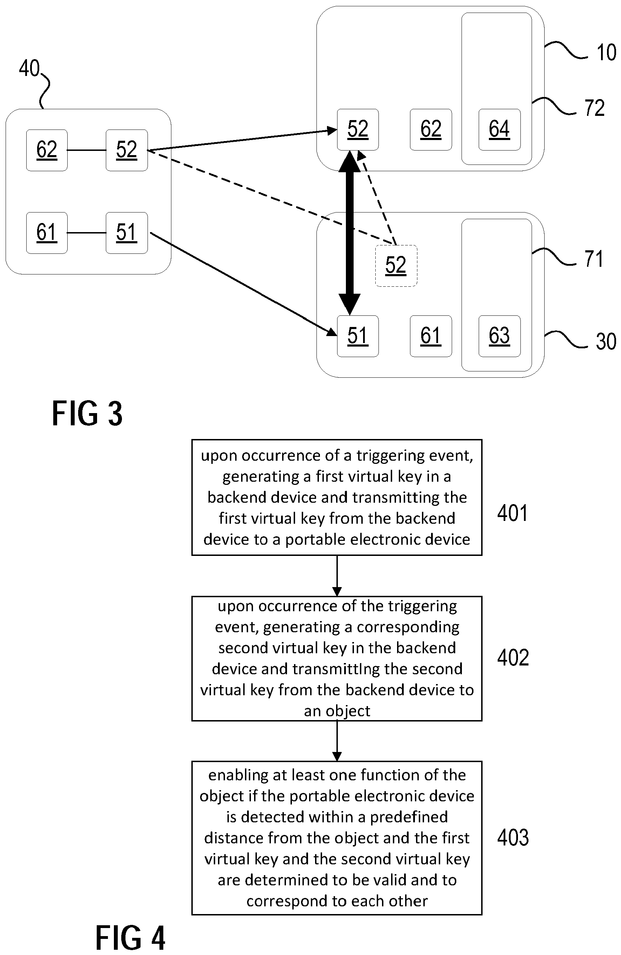

First and second pairs of cryptographic keys 61, 63, 62, 64 are exemplarily illustrated in Figure 3. The first private cryptographic key 63 may be stored in a hardware security module (HSM) of the portable electronic device 30 such as an embedded secure element (eSE) or a trusted execution environment (TEE) 71, for example. The second private cryptographic key 64 may be stored in a hardware security module of the vehicle 10 such as an embedded secure element (eSE) or a trusted execution environment (TEE) 72, for example.

The first and second virtual keys 51, 52, however, do not necessarily have to be stored and secured in a hardware security module 71, 72. This is, because the virtual keys 51, 52 are only valid for a certain amount of time or a certain number of uses and are replaced on a regular basis. Therefore, the risk of tampering or other attacks is significantly reduced, even if the virtual keys 51, 52 are not stored and secured in a hardware security module 71, 72.

The invention has been described using the example of a vehicle. However, it is also possible to use the invention for many other applications and objects, e.g., for unlocking doors or gates or for enabling many different functions of buildings (e.g., light control, heating control, control of windows, etc.). For example, a caretaker may be permitted to unlock the door to a building and control different functions of the building during his shift only. The caretaker may receive a new virtual key 51 on his portable electronic device 30 for each of his shifts. The virtual keys 51 on his portable electronic device 30, however, may expire once his shift ends and he may no longer be able to enter the building until he receives the next virtual key 51. According to another examples, functions of a robot such as a vacuum cleaning robot, for example, may be enabled with a first virtual key 51. Any other kind of uses are also possible.

Figure 4 exemplarily illustrates a method according to one embodiment of the present invention. The method comprises, upon occurrence of a triggering event, generating a first virtual key 51 in a backend device 40 and transmitting the first virtual key 51 from the backend device 40 to a portable electronic device 30 (step 401). Upon occurrence of the triggering event, a corresponding second virtual key 52 may be generated in the backend device 40 and transmitted from the backend device 40 to an object 10 (step 402). At least one function of the object 10 may be enabled (step 403) if the portable electronic device 30 is detected within a predefined distance from the object 10 and the first virtual key 51 and the second virtual key 52 are determined to be valid and to correspond to each other.

### List of reference signs

- 10: vehicle
- 20: control unit
- 30: portable electronic device
- 40: backend device
- 51: first virtual key
- 52: second virtual key
- 61: first public key
- 62: second public key
- 63: first private key
- 64: second private key

## Claims

1. A system comprising:
an object (10);
a portable electronic device (30); and
a backend device (40), wherein the backend device (40) is configured to,
upon occurrence of a triggering event, generate a first virtual key (51) and transmit the first virtual key (51) to the portable electronic device (30), and generate a corresponding second virtual key (52) and transmit the second virtual key (52) to the object (10), wherein
the object (10) is configured to enable at least one function of the object (10) if the portable electronic device (30) is detected within a predefined distance from the object (10) and the first virtual key (51) and the second virtual key (52) are determined to be valid and to correspond to each other,
the backend device (40) is configured to generate the first virtual key (51) and the second virtual key (52) after verifying that the portable electronic device (30) and the object (10) are both registered within the backend device (40), **characterised in that**,
the portable electronic device (30) comprises a first pair of cryptographic keys (61, 63), the first pair of cryptographic keys (61, 63) comprising a first private key (63) and a first public key (61), wherein the portable electronic device (30) is configured to transmit the first public key (61) to the backend device (40), and wherein the portable electronic device (30) is verified as being registered within the backend device (40) if the first public key (61) is stored within the backend device (40); and
the object (10) comprises a second pair of cryptographic keys (62, 64), the second pair of cryptographic keys (62, 64) comprising a second private key (64) and a second public key (62), wherein the object (10) is configured to transmit the second public key (62) to the backend device (40), and wherein the object (10) is verified as being registered within the backend device (40) if the second public key (62) is stored within the backend device (40).

2. The system of claim 1, wherein the first virtual key (51) is valid for a limited amount of time and/or for a limited number of enabling events.

3. The system of claim 2, wherein the first virtual key (51) may only be used to enable the at least one function of the object (10) once.

4. The system of any of the preceding claims, wherein the triggering event comprises at least one of:
a request from the portable electronic device (30);
the detection of the portable electronic device (30) being within a predefined distance from the object (10);
a request from an entitled authority.

5. The system of any of the preceding claims, wherein the first virtual key (51) is configured to enable limited or full usage of the at least one function of the object (10).

6. The system of any of the preceding claims, wherein the object (10) is a vehicle.

7. The system of claim 6, wherein the at least one function comprises at least one of:
unlocking at least one of the vehicle's doors;
starting the vehicle; and
driving the vehicle at a velocity that is below a predetermined maximum velocity.

8. A method comprising
upon occurrence of a triggering event, generating a first virtual key (51) in a backend device (40) and transmitting the first virtual key (51) from the backend device (40) to a portable electronic device (30);
upon occurrence of the triggering event, generating a corresponding second virtual key (52) in the backend device (40) and transmitting the second virtual key (52) from the backend device (40) to an object (10),
enabling at least one function of the object (10) if the portable electronic device (30) is detected within a predefined distance from the object (10) and the first virtual key (51) and the second virtual key (52) are determined to be valid and to correspond to each other, wherein
the first virtual key (51) and the second virtual key (52) are generated after verifying that the portable electronic device (30) and the object (10) are both registered within the backend device (40), **characterised in that**,
the portable electronic device (30) comprises a first pair of cryptographic keys (61, 63), the first pair of cryptographic keys (61, 63) comprising a first private key (63) and a first public key (61), wherein the portable electronic device (30) is configured to transmit the first public key (61) to the backend device (40), and wherein the portable electronic device (30) is verified as being registered within the backend device (40) if the first public key (61) is stored within the backend device (40); and
the object (10) comprises a second pair of cryptographic keys (62, 64), the second pair of cryptographic keys (62, 64) comprising a second private key (64) and a second public key (62), wherein the object (10) is configured to transmit the second public key (62) to the backend device (40), and wherein the object (10) is verified as being registered within the backend device (40) if the second public key (62) is stored within the backend device (40).

## Patentansprüche

1. System, das Folgendes umfasst:
ein Objekt (10);
eine tragbare elektronische Vorrichtung (30); und
eine Backend-Vorrichtung (40), wobei die Backend-Vorrichtung (40) konfiguriert ist, um,
bei Auftreten eines auslösenden Ereignisses einen ersten virtuellen Schlüssel (51) zu erzeugen und den ersten virtuellen Schlüssel (51) an die tragbare elektronische Vorrichtung (30) zu übertragen und einen entsprechenden zweiten virtuellen Schlüssel (52) zu erzeugen und den zweiten virtuellen Schlüssel (52) an das Objekt (10) zu übertragen, wobei
das Objekt (10) konfiguriert ist, um mindestens eine Funktion des Objekts (10) zu aktivieren, wenn die tragbare elektronische Vorrichtung (30) innerhalb eines vordefinierten Abstands von dem Objekt (10) detektiert wird und der erste virtuelle Schlüssel (51) und der zweite virtuelle Schlüssel (52) als gültig und einander entsprechend bestimmt werden,
die Backend-Vorrichtung (40) konfiguriert ist, um den ersten virtuellen Schlüssel (51) und den zweiten virtuellen Schlüssel (52) zu erzeugen, nachdem sie verifiziert hat, dass die tragbare elektronische Vorrichtung (30) und das Objekt (10) beide innerhalb der Backend-Vorrichtung (40) registriert sind, **dadurch gekennzeichnet, dass**,
die tragbare elektronische Vorrichtung (30) ein erstes Paar kryptographischer Schlüssel (61, 63) umfasst, wobei das erste Paar kryptographischer Schlüssel (61, 63) einen ersten privaten Schlüssel (63) und einen ersten öffentlichen Schlüssel (61) umfasst, wobei die tragbare elektronische Vorrichtung (30) konfiguriert ist, um den ersten öffentlichen Schlüssel (61) an die Backend-Vorrichtung (40) zu übertragen, und wobei die tragbare elektronische Vorrichtung (30) als in der Backend-Vorrichtung (40) registriert verifiziert wird, wenn der erste öffentliche Schlüssel (61) in der Backend-Vorrichtung (40) gespeichert ist; und
das Objekt (10) ein zweites Paar kryptographischer Schlüssel (62, 64) umfasst,
wobei das zweite Paar kryptographischer Schlüssel (62, 64) einen zweiten privaten Schlüssel (64) und einen zweiten öffentlichen Schlüssel (62) umfasst,
wobei das Objekt (10) konfiguriert ist, um den zweiten öffentlichen Schlüssel (62) an die Backend-Vorrichtung (40) zu übertragen, und wobei das Objekt (10) als in der Backend-Vorrichtung (40) registriert verifiziert wird, wenn der zweite öffentliche Schlüssel (62) in der Backend-Vorrichtung (40) gespeichert ist.

2. System nach Anspruch 1, wobei der erste virtuelle Schlüssel (51) für eine begrenzte Zeitspanne und/oder für eine begrenzte Anzahl von Aktivierungsereignissen gültig ist.

3. System nach Anspruch 2, wobei der erste virtuelle Schlüssel (51) nur einmal verwendet werden kann, um die mindestens eine Funktion des Objekts (10) zu aktivieren.

4. System nach einem der vorstehenden Ansprüche, wobei das auslösende Ereignis mindestens eines der folgenden umfasst:
eine Anforderung von der tragbaren elektronischen Vorrichtung (30);
die Detektion, dass sich die tragbare elektronische Vorrichtung (30) innerhalb eines vordefinierten Abstands zum Objekt (10) befindet;
eine Anforderung von einer befugten Autorität.

5. System nach einem der vorstehenden Ansprüche, wobei der erste virtuelle Schlüssel (51) konfiguriert ist, um die eingeschränkte oder vollständige Nutzung der mindestens einen Funktion des Objekts (10) zu aktivieren.

6. System nach einem der vorhergehenden Ansprüche, wobei das Objekt (10) ein Fahrzeug ist.

7. System nach Anspruch 6, wobei die wenigstens eine Funktion wenigstens eines der folgenden umfasst:
Entriegeln von mindestens einer der Fahrzeugtüren;
Starten des Fahrzeugs; und
Fahren des Fahrzeugs mit einer Geschwindigkeit, die unter einer vorbestimmten Höchstgeschwindigkeit liegt.

8. Verfahren, umfassend
bei Auftreten eines auslösenden Ereignisses, Erzeugen eines ersten virtuellen Schlüssels (51) in einer Backend-Vorrichtung (40) und Übertragen des ersten virtuellen Schlüssels (51) von der Backend-Vorrichtung (40) an eine tragbare elektronische Vorrichtung (30);
bei Auftreten des auslösenden Ereignisses, Erzeugen eines entsprechenden zweiten virtuellen Schlüssels (52) in der Backend-Vorrichtung (40) und Übertragen des zweiten virtuellen Schlüssels (52) von der Backend-Vorrichtung (40) an ein Objekt (10),
Aktivieren mindestens einer Funktion des Objekts (10), wenn die tragbare elektronische Vorrichtung (30) innerhalb eines vordefinierten Abstands von dem Objekt (10) detektiert wird und der erste virtuelle Schlüssel (51) und der zweite virtuelle Schlüssel (52) als gültig und einander entsprechend bestimmt werden, wobei
der erste virtuelle Schlüssel (51) und der zweite virtuelle Schlüssel (52) erzeugt werden, nachdem verifiziert ist, dass die tragbare elektronische Vorrichtung (30) und das Objekt (10) beide innerhalb der Backend-Vorrichtung (40) registriert sind, **dadurch gekennzeichnet, dass**,
die tragbare elektronische Vorrichtung (30) ein erstes Paar kryptographischer Schlüssel (61, 63) umfasst, wobei das erste Paar kryptographischer Schlüssel (61, 63) einen ersten privaten Schlüssel (63) und einen ersten öffentlichen Schlüssel (61) umfasst, wobei die tragbare elektronische Vorrichtung (30) konfiguriert ist, um den ersten öffentlichen Schlüssel (61) an die Backend-Vorrichtung (40) zu übertragen, und wobei die tragbare elektronische Vorrichtung (30) als in der Backend-Vorrichtung (40) registriert verifiziert wird, wenn der erste öffentliche Schlüssel (61) in der Backend-Vorrichtung (40) gespeichert ist; und
das Objekt (10) ein zweites Paar kryptographischer Schlüssel (62, 64) umfasst, wobei das zweite Paar kryptographischer Schlüssel (62, 64) einen zweiten privaten Schlüssel (64) und einen zweiten öffentlichen Schlüssel (62) umfasst, wobei das Objekt (10) konfiguriert ist, um den zweiten öffentlichen Schlüssel (62) an die Backend-Vorrichtung (40) zu übertragen, und wobei das Objekt (10) als in der Backend-Vorrichtung (40) registriert verifiziert wird, wenn der zweite öffentliche Schlüssel (62) in der Backend-Vorrichtung (40) gespeichert ist.

## Revendications

1. Système, comprenant :
un objet (10) ;
un dispositif électronique portable (30) ; et
un dispositif dorsal (40), le dispositif dorsal (40) étant configuré pour,
à l'occurrence d'un événement de déclenchement, générer une première clé virtuelle (51) et transmettre la première clé virtuelle (51) au dispositif électronique portable (30), et générer une seconde clé virtuelle correspondante (52) et
transmettre la seconde clé virtuelle (52) à l'objet (10), dans lequel l'objet (10) est configuré pour activer au moins une fonction de l'objet (10) si le dispositif électronique portable (30) est détecté en-deçà d'une distance prédéfinie de l'objet (10) et s'il est déterminé que la première clé virtuelle (51) et la seconde clé virtuelle (52) sont valides et correspondent l'une à l'autre,
le dispositif dorsal (40) est configuré pour générer la première clé virtuelle (51) et
la seconde clé virtuelle (52) après vérification que le dispositif électronique portable (30) et l'objet (10) sont tous deux enregistrés auprès du dispositif dorsal (40), **caractérisé en ce que**,
le dispositif électronique dorsal(30) comprend une paire de clés cryptographiques (61, 63), la première paire de clés cryptographiques (61, 63) comprenant une première clé privée (63) et une première clé publique (61), dans lequel le dispositif électronique portable (30) est configuré pour transmettre la première clé publique (61) au dispositif dorsal (40), et dans lequel le dispositif électronique portable (30) est vérifié comme étant enregistré auprès du dispositif dorsal (40) si la première clé publique (61) est stockée dans le dispositif dorsal (40) ; et
l'objet (10) comprend une seconde paire de clés cryptographiques (62, 64), la seconde paire de clés cryptographiques (62, 64) comprenant une seconde clé privée (64) et une seconde clé publique (62), dans lequel l'objet (10) est configuré pour transmettre la seconde clé publique (62) au dispositif dorsal (40), et dans lequel l'objet(10) est vérifié comme étant enregistré auprès du dispositif dorsal (40) si la seconde clé publique (62) est enregistrée auprès du dispositif dorsal (40).

2. Système selon la revendication 1, dans lequel la première clé virtuelle (51) est valide pendant une durée limitée et/ou pendant un nombre limité d'événements d'activation.

3. Système selon la revendication 2, dans lequel la première clé virtuelle (51) ne peut être utilisée qu'une seule fois pour l'activation de l'au moins une fonction de l'objet (10).

4. Système selon l'une quelconque des revendications précédentes, dans lequel l'événement de déclenchement comprend au moins un événement parmi :
une demande par le dispositif électronique portable (30 );
la détection que le dispositif portable (30) se trouve en deçà d'une distance prédéfinie de l'objet (10) ;
une demande par une autorité habilitée.

5. Système selon l'une quelconque des revendications précédentes, dans lequel la première clé virtuelle (51) est configurée pour permettre une utilisation limitée ou totale de l'au moins une fonction de l'objet (10).

6. Système selon l'une quelconque des revendications précédentes, dans lequel l'objet (10) est un véhicule.

7. Système selon la revendication 6, dans lequel l'au moins une fonction comprend au moins une fonction parmi :
le déverrouillage d'au moins une des portes du véhicule ;
le démarrage du véhicule ; et
la conduite du véhicule à une vitesse inférieure à une vitesse maximale prédéterminée.

8. Procédé comprenant
à l'occurrence d'un événement de déclenchement, la génération d'une première clé virtuelle (51) dans un dispositif dorsal (40) et la transmission de la première clé virtuelle (51) par le dispositif dorsal (40) à un dispositif électronique portable (30) ;
à l'occurrence de l'événement de déclenchement, la génération d'une seconde clé virtuelle correspondante (52) dans le dispositif dorsal (40) et la transmission de la seconde clé virtuelle (52) par le dispositif dorsal (40) à un objet (10),
l'activation d'au moins une fonction de l'objet (10) si le dispositif électronique portable (30) est détecté en-deçà d'une distance prédéfinie de l'objet (10) et il est déterminé que la première clé virtuelle (51) et la seconde clé virtuelle (52) sont valides et correspondent l'une à l'autre, dans lequel
la première clé virtuelle (51) et la seconde clé virtuelle (52) sont générées après vérification que le dispositif électronique portable (30) et l'objet (10) sont tous deux enregistrés auprès du dispositif dorsal (40), **caractérisé en ce que**,
le dispositif électronique portable (30) comprend une première paire de clés cryptographiques (61, 63), la première paire de clés cryptographiques (61, 63) comprend une première clé privée (63) et une première clé publique (61), dans lequel le dispositif électronique portable (30) est configuré pour transmettre la première clé publique (61) au dispositif dorsal (40), et dans lequel le dispositif électronique portable (30) est vérifié comme étant enregistré auprès du dispositif dorsal (40) si la première clé publique (61) est stockée dans le dispositif dorsal (40); et
l'objet (10) comprend une seconde paire de clés cryptographiques (62, 64), la seconde paire de clés cryptographiques (62, 64) comprenant une seconde clé privée (64) et une seconde clé publique (62), dans lequel l'objet (10) est configuré pour transmettre la seconde clé publique (62) au dispositif dorsal (40), et dans lequel l'objet(10) est vérifié comme étant enregistré auprès du dispositif dorsal (40) si la seconde clé publique (62) est enregistrée auprès du dispositif dorsal (40).
